# EUROPEAN PATENT SPECIFICATION

(11) **EP 4 281 700 B1**
(45) Date of publication and mention of the grant of the patent: **14.10.2026**
(21) Application number: 22743363.8
(22) Date of filing: 25.01.2022
(51) Int. Cl.: F16L 41/08, F16L 23/22, B60H 1/00

(54) **DUAL PLANE SEAL AIR CONDITIONER CONNECTOR**
DOPPELEBENENDICHTUNGS-KLIMAANLAGENVERBINDER
CONNECTEUR DE CONDITIONNEUR D'AIR À JOINT D'ÉTANCHÉITÉ À DEUX PLANS

(30) Priority: 25.01.2021 US 202117157638
(43) Date of publication of application: 29.11.2023
(73) Proprietor: Hutchinson Fluid Management Systems, Inc., Auburn Hills, MI 48326 (US)
(72) Inventor: SLAIS, Robert, J., Whashington, MI 48094 (US)
(74) Representative: Grünecker Patent- und Rechtsanwälte PartG mbB
(86) International application number: PCT/US2022/013649
(87) International publication number: WO 2022/159865

(56) References cited:
- EP-A1- 2 226 533
- EP-B1- 0 916 886
- US-A1- 2003 214 130
- US-A1- 2003 214 130
- US-A1- 2005 023 827
- US-A1- 2009 193 655
- US-A1- 2015 300 544
- US-A1- 2019 063 607
- US-A1- 2019 063 607
- US-B1- 6 386 593

## Description

### CROSS-REFERENCE TO RELATED APPLICATIONS

This application claims priority to U.S. Application No. 17/157,638, filed on January 25, 2021.

### FIELD OF THE DISCLOSURE

This disclosure relates to connectors used in conduit systems for conveying refrigerants in air conditioning systems, and more particularly to a connector having multiple seals to reduce refrigerant leakage.

### BACKGROUND OF THE DISCLOSURE

It is highly desirable to reduce leakage of refrigerants from air conditioning systems to reduce emissions of greenhouse gases into the environment, to maintain the cooling capacity and functionality of the air conditioning systems, and to reduce maintenance. Moreover, the more environmentally friendly tetrafluoropropene (R1234yf) refrigerant, which is mandated for all NAFTA vehicles by the model year 2021, has a higher flammability rating than currently used refrigerants such as tetrafluoroethane (R134a), creating an additional incentive for preventing refrigerant leakage. Further, there are incentives to reduce refrigerant emissions in order to gain government issued carbon credits.

Connectors used in motorized vehicle applications typically comprise male and female connector blocks that are fastened together. These connectors typically employ a single fastener to simplify assembly and reduce time and labor. Such connectors are sometimes referred to as cantilevered conduit connectors because the fastener extends through a passage at an end of the connector opposite an end of the connector wherein the conduit passage is located, resulting in a non-uniform distribution of forces between the mating surfaces of the connector blocks. The uneven distribution of forces can cause the mating surfaces of the connector blocks to develop gaps that could allow an undesirable leakage around seals. From US20030214130A1, a block fitting for a vehicle air conditioning system for coupling tubing segments is known. US6386593B1 discloses a device for improved sealing of a conduit connection. EP2226533A1 discloses a sealing washer that is used in block connectors of vehicle air-conditioning system.

### SUMMARY OF THE DISCLOSURE

Disclosed is a dual plane seal connector designed to provide highly leak resistant engagement between tubular fluid conduits, while employing a single fastener. The connector includes a female connector block including a generally planar face having a conduit receiving passage in fluid communication with a second fluid conduit, and a male connector block having a generally planar face for abutting the generally planar face of the female connector. A counter-bored conduit passage is provided in the generally planar face of the male connector block. The counter-bored conduit passage includes a first cylindrical bore having a first diameter and a first depth and a second cylindrical bore coaxial with the first cylindrical bore. The second cylindrical bore has a second diameter greater than the first diameter and a second depth less than the first depth. A tubular fluid conduit extends through the conduit passage. A circumferential groove is defined in a portion of the tubular fluid conduit that protrudes outwardly from the conduit passage and away from the generally planar face of the male connector block and into the conduit receiving passage of the female connector block. A sealing ring is located in the groove to provide a radial seal, and a seal washer is located in the second cylindrical bore to provide an axial seal.

Together, these features provide a simple, inexpensive design that provides easy assembly, and reduced leakage due at least in part to the use of two independent seals, and at least in part to reduced opportunity for gaps between the mating faces of the connector blocks because the sealing washer is recessed into the face of the male connector.

### BRIEF DESCRIPTION OF THE DRAWINGS

Figure 1 is a side cross-sectional view of a male connector block in accordance with this disclosure.
Figure 2 is an end view of the male connector block shown in Figure 1.
Figure 3 is a side view of a female connector block in accordance with this disclosure.
Figure 4 is a top view of the seal washer providing axial sealing between the male connector block and the female connector block.
Figure 5 is a cross-sectional view of the seal washer as viewed along lines A-A of Figure 4.

### DETAILED DESCRIPTION OF THE EMBODIMENTS

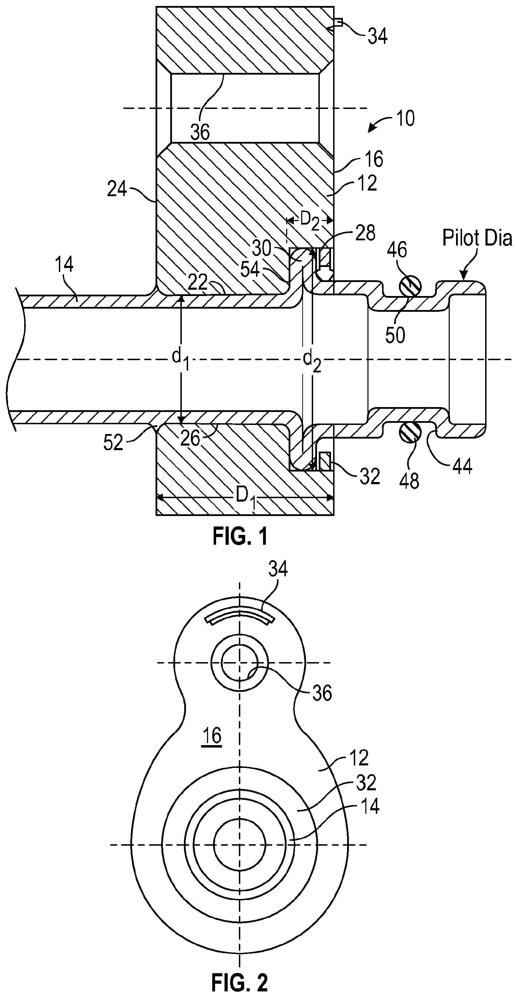

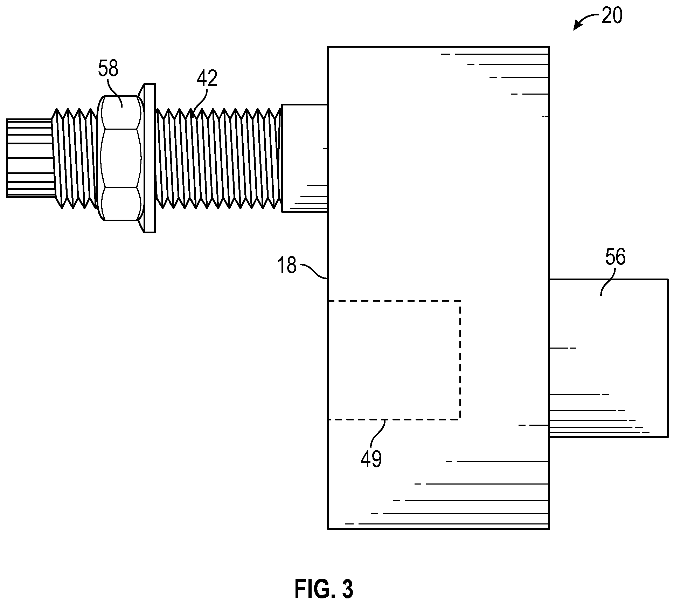

Shown in Figures 1 and 2 is a male connector block assembly 10, including a male connector block 12 and a tubular fluid conduit 14. Male connector block 12 has a generally planar face 16 for mating by abutting a generally planar face 18 of a female connector block 20 (Figure 3). The expression "generally planar face" means that face 16 of block 12 (and face 18 of block 20) are mostly (more than 50%) flat, parallel to each other, and in contact with each other when the connector is fully assembled. A counter-bored conduit passage 22 extends through male connector block 20 from face 16 to a back side 24 of block 20. Passage 22 includes a first cylindrical bore 26 having a first diameter d₁ and a first depth D₁ (equal to the thickness of block 20), and a second cylindrical bore 28 having a second diameter d₂ and a second depth D₂. In the illustrated embodiment, the depth D₂ of the second cylindrical bore 28 is such that a crimped section 30 of conduit 14 and a seal washer 32 are accommodated, with the outwardly facing surface of seal washer 32 (i.e., the surface facing to the right in Figure 1) being flush (i.e., level) with or coplanar with generally planar face 16 when it is compressed between male connector block 12 and female connector block 20. By using a round seal washer 32 disposed in a counter base (i.e., second cylindrical bore 28) on the generally planar face 16 of male connector block 12, as opposed to using a washer that is disposed between the entire area of generally planar faces 16 and 18 of blocks 12 and 20, cantilever (i.e., the tendency of the faces 16 and 18 to become skewed or non-parallel when fastened together) is reduced.

Optionally, a protuberance 34 can be provided on the generally planar face 16 of male connector block 12 to further reduce cantilever when male connector block 12 and female connector block 20 are fastened together. While protuberance 34 can be developed by machining the entire face 16 of block 12, protuberance 34 is preferably created by stamping or coining the face 16 adjacent to a fastener passage 36 to raise a predetermined amount of material to project away from face 16 (i.e., to the right in Figure 1). The protuberance 34 can have a tapered shape that thins to a point in the outward direction (i.e., toward the right in Figure 1). During assembly of the connection, the protuberance will create an anti-cantilever effect. The torque load caused by fastening blocks 12 and 20 together, such as with a nut tightened or torqued onto a threaded stud 42 that projects from the substantially planar face 18 of female connector block 20 and that passes through fastener passage 36 upon assembly of the connection, will slightly crush protuberance 34 tending to cause the faces 16 and 18 of blocks 12 and 20 to become parallel. As a result, gaps and unbalanced forces between faces 12 and 18 are avoided, thereby providing the best possible axial seal. The anti-cantilever effect of crushed protuberance 34 improves the consistency and adequacy of the axial seal by eliminating or reducing cantilevering effects caused by unpredictable dimensional variations of multiple components during manufacturing.

Tubular fluid conduit 14 is provided with a circumferential groove 44 on a portion of conduit 14 that protrudes outwardly from conduit passage 22 (i.e., to the right of face 16 in Figure 1) and away from the generally planar face 16 of male connector block 12.

Located within circumferential groove 44 is a sealing ring 46 (e.g., an elastomeric O-ring). Sealing ring 46 includes an outward circumferential surface 48 contacting a surface of a conduit receiving passage 49 in female connector block 20, and an inward circumferential surface 50 sealingly contacting groove 44. Sealing ring 46 provides a radial seal between tubular fluid conduit 14 and conduit receiving passage 49 in female connector block 20.

As shown in Figure 1, conduit 14 can be immobilized in the first cylindrical bore 26 of conduit passage 22 with spaced apart crimps 30 and 52. Crimp 30 engages a bottom surface 54 of second cylindrical bore 28, and crimp 52 engages a surface of back side 24 of block 20.

A single fastener can be used for forming a sealed connection between conduit 14 secured to male connector block 12 and a conduit 56 secured to female connector block 20. In the illustrated embodiment, female block 20 is provided with an integral threaded stud 42 that is adapted to pass through fastener passage 36. A nut 58 is used for compressing surfaces 16 and 18 together to form a fluid-tight connection. Fastener passage 36 is located between conduit passage 22 and protuberance 34.

Sealing ring 46 is preferably made of an elastomeric material. A preferred elastomeric material for sealing ring 46 is hydrogenated nitrile butadiene rubber (HNBR). Sealing ring 46 is preferably lubricated, such as with polyalkylene glycol (PAG oil) or silicon oil to allow sealing ring 46 to more easily slide along surfaces of conduit receiving passage 49 to avoid pinching and undesirable deformation of sealing ring 46 during assembly of a leak resistant connection. Alternatively, or additionally, sealing ring 46 can be provided with a polytetrafluoroethylene coating to eliminate or reduce unwanted pinching and other deformation of ring 46.

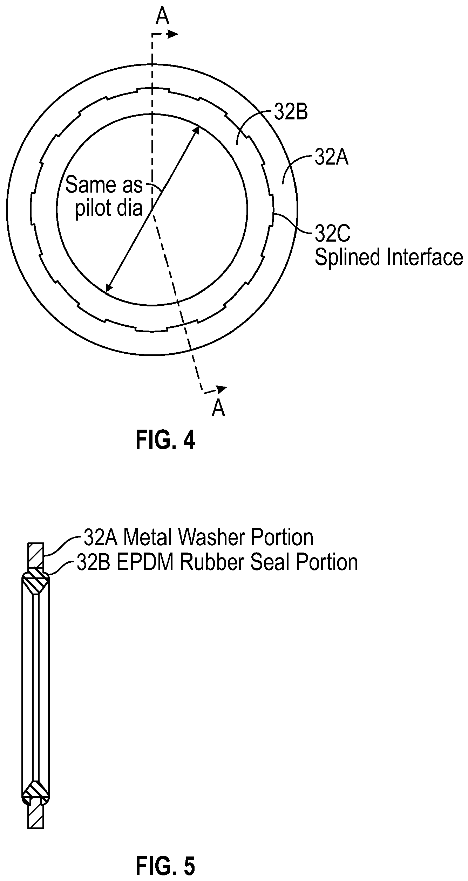

Seal washer 32 is preferably comprised of a metal (e.g., aluminum or steel) washer portion 32A that has a thickness approximately equal to the difference between the depth of counter bore 28 and the longitudinal thickness of crimped section 30, and an elastomeric portion 32B that can be made of the same elastomeric material used to make sealing ring 46, but is more preferably comprised of a different elastomer. In a particularly preferred embodiment, seal washer 32 is made of ethylene propylene diene monomer (EPDM) rubber. Having two different elastomeric materials used for washer 32 and ring 46, such as EPDM for washer 32 and HNBR for ring 46, provides better overall performance, especially under extreme conditions, such as extreme temperatures. For example, EPDM has better low temperature sealing capability and HNBR has better high temperature sealing capability. The metal washer portion 32A and elastomeric portion 32B can be mechanically joined such as with splines at interface 32C. Alternatively, or additionally, the washer portion and elastomeric portion of seal washer 32 can be chemically joined (e.g., with an adhesive material). The elastomeric portion 32B of seal washer 32 can have a tear-drop-like cross-sectional profile as shown in Figure 5 that is compressed within the remaining space between crimp 30 and female connector block 20 that is not occupied by washer portion 32A upon complete assembly of the connection.

Conduit receiving passage 49 preferably has walls defined by a truncated conical shape, which leads sealing ring 46 into passage 46 with reduced pinching. As an example, the half angle of the truncated conical shape can be from about 5 degrees to 25 degrees, such as 10 degrees to 20 degrees, 15 degrees to 20 degrees, or about 18 degrees.

The combination of features provides a non-cantilever seal, wherein leakage past the O-ring 46 can be blocked by seal washer 32.

Accordingly, it is to be understood that the above description is intended to be illustrative and not restrictive. Many embodiments and applications other than the examples provided would be apparent upon reading the above description. The scope of the invention should be determined with reference to the appended claims.

## Claims

1. A male connector block assembly (10) adapted to provide a fluid tight engagement between a tubular fluid conduit (14) and a female connector block (20) including a generally planar face (18) having a conduit receiving passage (49) in fluid communication with a second fluid conduit (56), comprising:
a male connector block (12) having a generally planar face (16) for abutting the generally planar face (18) of the female connector, a counter-bored conduit passage (22) in the generally planar face (16) of the male connector block (12) including a first cylindrical bore (26) having a first diameter (d₁) and a first depth (D₁) and a second cylindrical bore (28), coaxial with the first cylindrical bore (26), having a second diameter (d₂) greater than the first diameter (d₁) and a second depth (D₂) less than the first depth (D₁);
a tubular fluid conduit (14) extending through the counter-bored conduit passage (22), a circumferential groove (44) defined in a portion of the tubular fluid conduit (14) protruding outwardly from the counter-bored conduit passage (22) and away from the generally planar face (16) of the male connector block (12); and
a sealing ring (46) located within the circumferential groove (44) having an outward circumferential surface (48) for sealingly contacting the conduit receiving passage (49) of the female connector block (20) and an inward circumferential surface (50) sealingly contacting the outer circumferential groove (44) of the tubular fluid conduit (14) for providing a radial seal between the tubular fluid conduit (14) and the conduit receiving passage (49) of the female connector block (20);
**characterized in that**
the male connector block assembly (1) comprises a seal washer (32) located in the second cylindrical bore (28) for providing an axial seal between the male connector block (12) and the female connector block (20).

2. The assembly of claim 1, wherein the tubular fluid conduit (14) is immobilized in the counter-bored conduit passage (22).

3. The assembly of claim 1 or 2, wherein the tubular fluid conduit (14) is immobilized in the counter-bored conduit passage (22) by two spaced apart crimps (30, 52) in the tubular fluid conduit (14), including a first crimp (30) contacting a bottom surface (54) of the second cylindrical bore (28) in the male connector block (12) and a second crimp (52) contacting a surface on a side of the male connector block (12) opposite of the generally planar face (16) of the of the male connector block (12).

4. The assembly of any of the preceding claims, wherein the male connector block (12) includes a single fastener passage (36) for receiving a threaded stud (42) that facilitates fastening of the male connector block (12) to a female connector block (20).

5. The assembly of claim 4, wherein a protuberance (34) projects from the generally planar face (16) of the male connector block (12) to more uniformly distribute forces between abutting generally planar faces (16, 18) of the male and female connector blocks (12, 20).

6. The assembly of claim 5, wherein the fastener passage (36) is located between the counter-bored conduit passage (22) and the protuberance (34).

7. The assembly of any of the preceding claims, wherein the sealing ring (46) and seal washer (32) are made of an elastomeric material.

## Patentansprüche

1. Eine Steckerblockbaugruppe (10), die dazu ausgelegt ist, eine flüssigkeitsdichte Verbindung zwischen einer rohrförmigen Fluidleitung (14) und einem Buchsenblock (20) herzustellen, der eine im Wesentlichen ebene Fläche (18) mit einem Leitungsaufnahmedurchgang (49) aufweist, der in Fluidverbindung mit einer zweiten Fluidleitung (56) steht, umfassend:
einen Steckerblock (12) mit einer im Wesentlichen ebenen Fläche (16) zum Anlegen an die im Wesentlichen ebene Fläche (18) der Buchse, einen versenkten Leitungsdurchgang (22) in der im Wesentlichen ebenen Fläche (16) des Steckerblocks (12), der eine erste zylindrische Bohrung (26) mit einem ersten Durchmesser (d1) und einer ersten Tiefe (D1) sowie eine zweite zylindrische Bohrung (28), die koaxial zur ersten zylindrischen Bohrung (26) ist und einen zweiten Durchmesser (d2) aufweist, der größer ist als der erste Durchmesser (d1), sowie eine zweite Tiefe (D2), die kleiner ist als die erste Tiefe (D1);
eine rohrförmige Fluidleitung (14), die sich durch den vertieften Leitungsdurchgang (22) erstreckt, eine Umfangsnut (44), die in einem Abschnitt der rohrförmigen Fluidleitung (14) ausgebildet ist, der aus dem vertieften Leitungsdurchgang (22) nach außen und von der im Wesentlichen ebenen Fläche (16) des Steckerblocks (12) weg vorsteht; und
einen Dichtungsring (46), der in der Umfangsnut (44) angeordnet ist und eine nach außen gerichtete Umfangsfläche (48) aufweist, um mit der Leitungsaufnahmedurchgang (49) des Buchsenblocks (20) dichtend in Kontakt zu stehen, sowie eine nach innen gerichtete Umfangsfläche (50) aufweist, die dichtend mit der äußeren Umfangsnut (44) der rohrförmigen Fluidleitung (14) in Kontakt steht, um eine radiale Abdichtung zwischen der rohrförmigen Fluidleitung (14) und dem Leitungsaufnahmedurchgang (49) des Buchsenblocks (20) bereitzustellen;
**dadurch gekennzeichnet, dass**
die Steckerblockbaugruppe (1) eine in der zweiten zylindrischen Bohrung (28) angeordnete Dichtungsscheibe (32) umfasst, um eine axiale Abdichtung zwischen dem Steckerblock (12) und dem Buchsenblock (20) herzustellen.

2. Die Baugruppe nach Anspruch 1, wobei die rohrförmige Fluidleitung (14) in dem versenkten Leitungsdurchgang (22) fixiert ist.

3. Die Baugruppe nach Anspruch 1 oder 2, wobei die rohrförmige Fluidleitung (14) in dem aufgebohrten Leitungsdurchgang (22) durch zwei voneinander beabstandete Crimpstellen (30, 52) in der rohrförmigen Fluidleitung (14), einschließlich einer ersten Crimpstelle (30), die mit einer Bodenfläche (54) der zweiten zylindrischen Bohrung (28) im Steckerblock (12) in Kontakt steht, und einer zweiten Crimpstelle (52), die mit einer Fläche an einer Seite des Steckerblocks (12) in Kontakt steht, die der im Wesentlichen ebenen Fläche (16) des Steckerblocks (12) gegenüberliegt.

4. Die Baugruppe nach einem der vorstehenden Ansprüche, wobei der Steckerblock (12) einen einzigen Befestigungsdurchgang (36) zur Aufnahme eines Gewindebolzens (42) aufweist, der die Befestigung des Steckerblocks (12) an einem Buchsenblock (20) erleichtert.

5. Die Baugruppe nach Anspruch 4, wobei ein Vorsprung (34) von der im Wesentlichen ebenen Fläche (16) des Steckerblocks (12) hervorsteht, um Kräfte zwischen aneinanderstoßenden, im Wesentlichen ebenen Flächen (16, 18) des Steckerblocks und des Buchsenblocks (12, 20) gleichmäßiger zu verteilen.

6. Die Baugruppe nach Anspruch 5, wobei sich der Befestigungsdurchgang (36) zwischen dem versenkten Leitungsdurchgang (22) und dem Vorsprung (34) befindet.

7. Die Baugruppe nach einem der vorstehenden Ansprüche, wobei der Dichtungsring (46) und die Dichtungsscheibe (32) aus einem elastomeren Material bestehen.

## Revendications

1. Ensemble de bloc de raccordement mâle (10) adapté pour assurer un engagement étanche aux fluides entre une conduite de fluide tubulaire (14) et un bloc de raccordement femelle (20) comprenant une face globalement plane (18) ayant un passage de réception de conduite (49) en communication fluidique avec une seconde conduite de fluide (56), comprenant :
un bloc de raccordement mâle (12) ayant une face globalement plane (16) pour venir en butée contre la face globalement plane (18) du raccord femelle, un passage de conduite à contre alésage (22) dans la face globalement plane (16) du bloc de raccordement mâle (12) comprenant un premier alésage cylindrique (26) ayant un premier diamètre (d₁) et une première profondeur (D₁), et un second alésage cylindrique (28), coaxial au premier alésage cylindrique (26), ayant un second diamètre (d₂) supérieur au premier diamètre (d₁) et une seconde profondeur (D₂) inférieure à la première profondeur (D₁) ;
une conduite de fluide tubulaire (14) s'étendant à travers le passage de conduite à contre alésage (22), une rainure circonférentielle (44) définie dans une portion de la conduite de fluide tubulaire (14) faisant saillie vers l'extérieur du passage de conduite à contre alésage (22) et éloignée de la face globalement plane (16) du bloc de raccordement mâle (12) ; et
une bague d'étanchéité (46) située dans la rainure circonférentielle (44) ayant une surface circonférentielle extérieure (48) pour venir en contact de manière étanche avec le passage de réception de conduite (49) du bloc de raccordement femelle (20) et une surface circonférentielle intérieure (50) pour venir en contact de manière étanche avec la rainure circonférentielle extérieure (44) de la conduite de fluide tubulaire (14) afin d'assurer l'étanchéité radiale entre la conduite de fluide tubulaire (14) et le passage de réception de conduite (49) du bloc de raccordement femelle (20) ;
**caractérisé en ce que**
l'ensemble de bloc de raccordement mâle (1) comprend une rondelle d'étanchéité (32) située dans le second alésage cylindrique (28) afin d'assurer une étanchéité axiale entre le bloc de raccordement mâle (12) et le bloc de raccordement femelle (20).

2. Ensemble selon la revendication 1, dans lequel la conduite de fluide tubulaire (14) est immobilisée dans le passage de conduite à contre-alésage (22).

3. Ensemble selon la revendication 1 ou 2, dans lequel la conduite de fluide tubulaire (14) est immobilisée dans le passage de conduite à contre alésage (22) par deux sertissages espacés (30, 52) dans la conduite de fluide tubulaire (14), comprenant un premier sertissage (30) en contact avec la surface inférieure (54) du second alésage cylindrique (28) dans le bloc de raccordement mâle (12) et un second sertissage (52) en contact avec une surface du côté du bloc de raccordement mâle (12) opposée à la face globalement plane (16) du bloc de raccordement mâle (12).

4. Ensemble selon l'une des revendications précédentes, dans lequel le bloc de raccordement mâle (12) comprend un seul passage de fixation (36) pour recevoir une tige filetée (42) qui facilite la fixation du bloc de raccordement mâle (12) à un bloc de raccordement femelle (20).

5. Ensemble selon la revendication 4, dans lequel une protubérance (34) fait saillie de la face globalement plane (16) du bloc de raccordement mâle (12) pour répartir plus uniformément les forces entre les faces globalement planes (16, 18) en butée des blocs de raccordement mâle et femelle (12, 20).

6. Ensemble selon la revendication 5, dans lequel le passage de fixation (36) est situé entre le passage de conduite à contre alésage (22) et la protubérance (34).

7. Ensemble selon l'une des revendications précédentes, dans lequel la bague d'étanchéité (46) et la rondelle d'étanchéité (32) sont réalisées en matériau élastomère.
